# EUROPEAN PATENT APPLICATION

(11) **EP 4 620 755 A1**
(43) Date of publication of application: **24.09.2025**
(21) Application number: 24164834.4
(22) Date of filing: 20.03.2024
(51) Int. Cl.: B60T 17/04, F04B 49/22

(54) **UNLOADER VALVE ASSEMBLY WITH AN INTEGRATED SAFETY VALVE**

(71) Applicant: KNORR-BREMSE Systeme für Nutzfahrzeuge GmbH, 80809 München (DE)
(72) Inventor: BERCZY, Gergely, 6000 Kecskemet (HU); MUDRI, Zoltan, 6000 Kecskemét (HU)

(57) **Abstract**

An unloader valve assembly (102) for a compressed air supply system (100), in particular for a compressed air supply system of a vehicle, the unloader valve assembly (102) comprising an unloader valve (104), wherein the unloader valve (104) comprises a piston (106) and a first spring (108), and wherein the piston is configured to move against a biasing force of the first spring (108) between a seated position on a first valve seat (110) and a first unseated position, the unloader valve assembly (102) further comprising a safety valve (130), wherein the safety valve (130) is configured to be activated for directing a compressed air received from an inlet channel (114) to a discharge channel (116), when a pressure in the inlet channel (114) exceeds a first predetermined condition.

## Description

The present invention relates to an unloader valve assembly with an integrated safety valve within a Global Scalable Air Treatment system, in particular an unloader valve assembly comprising an integrated safety valve for a compressed air supply system of a vehicle.

A vehicle air compressor is configured to pressurize and deliver compressed air for various purposes in a vehicle, such as operating pneumatic tools, inflating tires, or assisting in the operation of the vehicle's braking system.

The air compressor typically operates in conjunction with an air dryer (e.g. an air-drying cartridge) and an unloader valve to ensure the proper functioning and maintenance of the compressed air supply. The compressed air is stored in storage tanks until it is needed, for example for actuating the braking system of the vehicle.

A pressure control system is also provided in the compressed air supply system to regulate the pressure of the compressed air within a desired range. The pressure control system comprises various components like pressure sensors, valves, and regulators.

The compressed air contains moisture, and in some cases, it may also contain contaminants like oil or dirt. The air dryer is configured to remove moisture and to filter out contaminants from the compressed air. The air dryer typically contains desiccant materials that absorb moisture, ensuring that dry and clean air is supplied to the vehicle's braking system. The air dryer (i.e. the desiccant materials), however, has a limited capacity for absorption and has to be regenerated. The regeneration process of the air dryer involves removing the accumulated moisture from the desiccant material used in the dryer. This helps restore the drying capacity of the air dryer. To this end, a portion of the dry compressed air from the compressed air system is directed back through the air dryer. This process is typically controlled by a valve mechanism included in the air pressure control system. The dry air flows in the reverse direction through the desiccant bed, effectively sweeping away the moisture that has been adsorbed by the desiccant material. The moisture-loaded air is then vented out of the system, while the dry air continues its flow back into the main air system for further use.

In general, the air compressor runs either in a loaded mode or an unloaded mode.

In the loaded mode, the air compressor remains actively engaged and continuously compresses air via the air dryer into the storage tanks and/or air receivers. This mode is commonly used when the demand for compressed air is high or when the vehicle requires a constant supply of compressed air for tasks like heavy-duty pneumatic tools or continuous braking assistance.

In the unloaded mode, the air compressor disengages the compression process when the demand for compressed air decreases or stops.

In relation to the operation of the air compressor, the primary function of the unloader valve is to unload the air compressor when the demand for the compressed air decreases or stops in the air supply system.

The unloader valve is usually located near the air compressor and is connected to the air compressor and the storage tanks. When the pressure in the storage tanks reaches a maximum level, the unloader valve opens, thereby diverting the compressed air from the compressor and allowing excess air to escape (e.g. into atmosphere). This prevents the air system from becoming over-pressurized and extends the life of the air compressor.

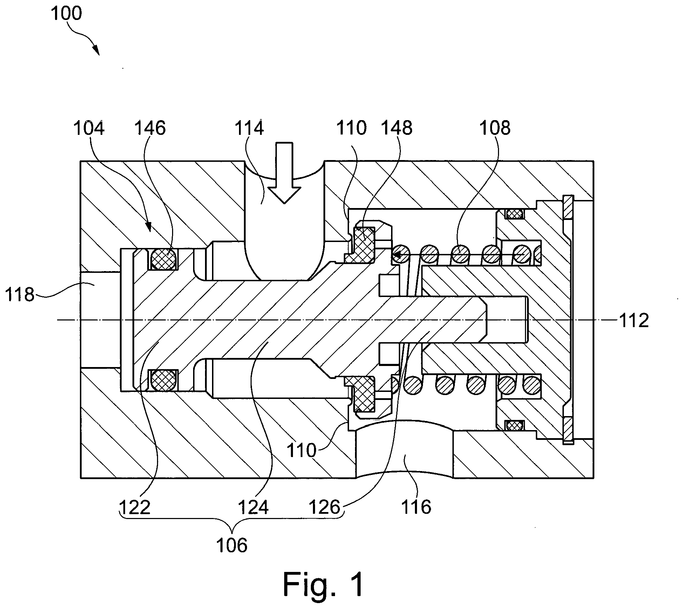

An example of a known unloader valve 104 for a compressed air supply system 100 of a vehicle (e.g. the vehicle's braking system) is shown in Fig. 1. The unloader valve 104 is configured to release the pressurized compressed air when the demand is decreased or no air supply is needed, e.g. for the braking system.

The unloader valve 104 is accordingly configured to unload the pressurized air received via an inlet channel 114 from an air compressor (not shown) through a discharge channel 116 to atmosphere.

The unloader valve 104 comprises a piston 106 (including a piston head 122, a piston body 124 and a piston pin 126) and a (first) spring 108. The piston head comprises a ring groove (around its perimeter) for retaining a first sealing ring 146. The piston body comprises a recess for retaining a second sealing ring 148.

The piston 106 is disposed in a main chamber and is configured to move (along a central axis 112) against a biasing force of the (first) spring 108 between a closed seated position on a valve seat and an open unseated position. The unloader spring force is configured to keep the piston in a closed position (or state).

During the regeneration process of the air dryer, the moisture-loaded air enters the main chamber via the inlet channel. The pressure control system is configured to activate the unloader valve, via a pressure control signal, to release the moisture-loaded air into atmosphere.

The unloader valve is then activated (i.e. opened) upon receiving the control pressure via a control channel 118 onto the piston head. That is, the accumulated forces acting on the piston (i.e. the force applied via the inlet channel and the control channel) surpass the spring force and opens the unloader piston. This operation of the unloader valve is referred to as a normal mode.

During the opening operation of the unloader valve the so-called stick-slip effect of the sealing rings/elements, particularly the first sealing ring, occurs. This phenomenon leads to a pressure increase in the inlet channel such that once the surface friction of the first sealing ring is overcome then the unloader valve spontaneously opens wide (due to the sudden and quick movement of the piston in the chamber), thereby resulting in a sudden pressure loss and/or even pressure collapse in the air supply system.

The unloader valves incorporate safety measures to address failures in the air supply system and/or the pressure control system. For example, in one case the pressure control system fails and the compressor pumps the air beyond the required level, endangering the pressure resistance of subsequent components. According to one another case, for example, the pressure control system fails and the air compressor runs in the loaded mode but the flow of the compressed air is blocked and the compressed air cannot be delivered to the storage tanks and or compressed air receivers. This operation of the unloader valve is referred to as a safety mode.

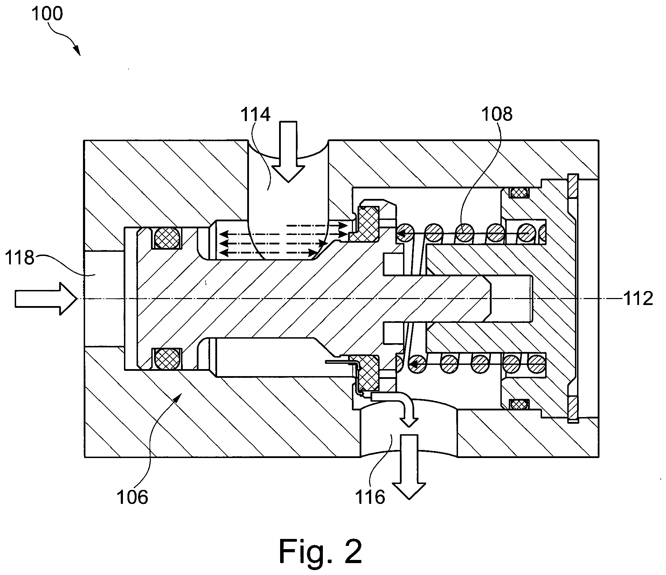

In cases of failure in the air supply system or the pressure control system, there is no control pressure available in the control channel and the pressure of the compressed air in the inlet channel is increased. This creates unbalanced forces which act onto the piston, i.e. piston body (shown as broken-dotted arrows in Fig. 2).

This disbalance in the force distribution is generated due to the different surface areas of the piston head and the piston body at locations, where the pressure acts, in particular the difference in the surface areas retaining the first and second sealing element of the piston. When the net force acting on the piston overcomes the spring force, the unloader valve ultimately opens.

However, when the piston begins to move, the leaking pressurized air immediately expands significantly, because after the valve seat the discharge channel provides for a flow path that has a cross-section bigger than that one at the the valve seat (schematically indicated by the different-sized of arrows in Fig. 2). The result of this characteristic (non-unifom flow distributions) is that the unloader valve opens slightly as the movement of the piston is limited by the spring force acting thereon. The unloader valve therefore disadvantagouseouly remains (mostly) in a leak-like state (semi-open/close state). This in turn limits the amount of pressurized air that can be released through the unloader valve.

A further drawback of the aforesaid leak-like state of the known unloader valve resides in that at a certain air flow, despite the unloader valve is open, the pressure in the compressed air supply system (e.g. in the braking system) start to increase.

It is therefore an object of the present invention to overcome the drawbacks of the known unloader valves. In particular, an improved unloader valve assembly is provided, which can be operated in a reliable and controllable manner.

Advantageously, the unloader valve assembly according to the present invention is configured to operate in a more reliable safety mode, which provides for a smooth switching between opening and closing states of the unloader, i.e. it prevents the sudden opening and/or closing of the unloader valve assembly.

Further, the flow distribution of the compressed air through the unloader valve assembly are improved.

This object is achieved in the present invention by an unloader valve assembly according to claim 1. Accordingly, an unloader valve assembly for a compressed air supply system, in particular for a compressed air supply system of a vehicle. The unloader valve assembly comprising:
the unloader valve assembly comprising an unloader valve,
wherein the unloader valve comprises a piston and a first spring, and
wherein the piston is configured to move against a biasing force of the first spring between a seated position on a first valve seat and a first unseated position,
wherein the unloader valve assembly further comprises a safety valve,
wherein the safety valve is configured to be activated for directing a compressed air received from an inlet channel to a discharge channel, when a first predetermined condition in the inlet channel is exceeded by the compressed air.

Further aspects and preferred embodiments are defined in the appended dependent claims.

The invention is based on the idea that an unloader valve assembly comprises an unloader valve and an integrated safety valve, i.e. to combine multiple valve functions which can be executed by different valve means, preferably embodied by an integrated overall design.

The unloader valve comprises a piston and a first spring, wherein the piston is configured to move against a biasing force of the first spring between a seated position on a first valve seat and a first unseated position. The safety valve the safety valve is configured to be activated for directing a compressed air received from an inlet channel to a discharge channel, when a pressure in the inlet channel exceeds a first predetermined condition, e.g. a given pressure level.

For example, the safety valve is configured to be activated for directing a compressed air received from the inlet channel to the discharge channel when the amount/volume of the compressed air which is filled in the inlet chamber and is acting on the piston, particularly the air pressure level resulting from the compressed air, exceeds a (first) predetermined level.

In particular, the unloader valve is configured to receive a compressed air via an inlet channel and a control pressure via a control channel, wherein at the first seated position the unloader valve is closed, thereby preventing the compressed air to escape through a discharge channel, and at the unseated position the unloader valve is open, thereby permitting the compressed air to escape through the discharge channel.

Advantageously, the safety valve is configured to become activated by the e.g. the pressure in the inlet channel increasing, for example when the air flow within the air supply system is blocked upstream of the compressor and/or the air dryer or when the pressure control system fails to apply the pressure control causing the unloader valve to maintain the closed state although the first predetermined condition, i.e. for example a maximum pressure level, is reached.

In particular, the safety valve is disposed within a piston chamber defined within the piston of the unloader valve. This leads to a compact and cost-efficient design with an easier control of the flow path or distribution of the compressed air. Advantageously a uniform (or symmetrical) flow distribution within the piston chamber is achieved.

In particular, the piston chamber comprises an outlet channel that is configured to communicate with the discharge channel. In this way, flow parameters of the compressed air exiting the unloader valve assembly is better controlled.

In particular, the piston comprises a piston channel that is configured to guide the compressed air into the piston chamber. In this way, a symmetrical flow path/distribution of the compressed air acting on the safety valve can be obtained.

In particular, the safety valve comprises a valve stem and a second spring acting on the valve stem to keep the safety valve in a closed state, wherein in the closed state the safety valve is configured to prevent the compressed air from entering into the piston chamber. In this way, a reliable safety valve is provided such that the opening (activation) of the safety valve can be easily and accurately adjusted by calibrating the (second) spring force of the safety valve, for example, depending on the control pressure signal.

In particular, the valve stem is configured to be moved along a central axis and against a biasing force of the second spring between a seated position on a second valve seat and a second unseated position, wherein the stem valve is configured to move/to be moved by a force generated by the compressed air channelled into the piston chamber.

In particular, the valve stem comprises a head portion. Preferably the head portion comprises a recess for receiving a sealing element.

In particular, the safety valve comprises a buffer chamber for maintaining the compressed air in a first open state mode within the piston chamber, preferably in the first open state mode, the compressed air provides (has reached or meets) the first predetermined condition. For example, in the first open state mode, the pressure of the compressed air acting on the safety valve (or the stem valve) exceeds the predetermined level, preferably a (air) pressure level.

In particular, the buffer chamber comprises a chamber that is disposed (defined) between the head portion of the stem valve, in particular an outer perimeter of the head portion, and an inner perimeter of the piston chamber.

In particular, the buffer chamber is created through a gap or space that is provided between the inner perimeter of the piston and the outer perimeter of the valve stem's head portion.

In particular, the head portion of the stem valve comprises dimensions that are configured to block entry of the compressed air into the piston chamber.

In particular, in the first open state mode, the valve stem is configured to be moved in the piston chamber, thereby allowing the accumulation of the compressed air in the buffer chamber that is defined between the outer perimeter of the head portion and the inner perimeter of the piston chamber.

In particular, no sealing element is provided between the inner perimeter of the piston and the valve stem's head portion perimeter that encloses the buffer chamber. A gap exists between the inner perimeter of the piston and the perimeter of the valve stem's head portion. For example, the gap is about 0.07, 0.06, 0,05 or 0.04 mm. The gap is configured to function (operate) as a nozzle, preventing a quick and sudden pressure loss, and thus, allowing pressure to build up in the buffer chamber. In particular, the accumulation of the pressure in the buffer chamber triggers a second open state mode of the safety valve.

In particular, the safety valve is configured to obtain a second open state mode, when the compressed air within the buffer chamber exceeds the first predetermined condition, in particular providing a second predetermined condition. For example, to achieve the second state mode the pressure of the compressed air acting on the stem valve can exceed a second level, e.g. a second (air) pressure level.

In particular, in the second open state mode the valve stem is configured to move, thereby directing the compressed air via the outlet channel into the discharge channel.

In particular, the piston further comprises a piston head, a piston body and a piston pin. Preferably the piston pin is detachably fixed to the piston body. For example, the piston pin is screwed onto an inner perimeter of the piston body.

In particular, the piston body comprises a first bore and a second bore, and the piston pin comprises a third bore. Preferably, the first, second and third bores together define the piston chamber for accommodating the safety valve.

In particular, the piston head comprises a groove on its outer perimeter for receiving a first sealing ring.

In particular, the piston body comprises a recess for receiving a second sealing ring on its outer perimeter.

In particular, the unloader assembly further comprises a fixing element, e.g. a metallic retaining disc, for fixing and securing the second sealing ring in place.

In particular, the second sealing ring comprises a square cross-section.

In particular, the combination of the square cross section of the second sealing ring and the fixing element further enhances the positioning of the second sealing ring 148 and improves its performance over time. Advantageously, this approach ensures that if the gasket or the sealing ring swells due to contact with aggressive media, the fastening mechanism will still prevent the seal from dislodging, thus preventing malfunction.

### It is shown in

- **Fig. 1**: an unloader valve for a compressed air supply system in a closed state according to the prior art;
- **Fig. 2**: an unloader for a compressed air supply system valve according to the prior art in an open state mode;
- **Fig. 3**: an unloader valve assembly comprising an unloader valve and a safety valve according to the present invention, indicating the safety valve in a closed state (inactive);
- **Fig. 4**: an unloader valve assembly comprising a safety valve according to the present invention, indicating the safety valve in an open state mode (active);
- **Fig. 5**: a schematic part view of an unloader valve assembly according to the present invention, indicating the safety valve in a first open state mode;
- **Fig. 6**: a schematic part view of an unloader valve assembly according to the present invention, indicating the safety valve in a second open state mode; and
- **Fig. 7**: a schematic part view of an unloader valve assembly according to the present invention, indicating a piston and sealing elements.

**Figs. 1** and **2** schematically illustrate the unloader valve 104 for the compressed air system according to the prior art (as explained under the above), respectively, in the closed and open state modes.

The unloader valve 104 is configured to receive the compressed air via the inlet channel 114.

The unloader valve 104 is further configured to receive a control pressure signal via a control channel 118.

In the closed state, the piston 106 of the unloader valve 104 is sealingly arranged (disposed) onto a first seat valve 110.

In particular, in the closed state the (pressurized) compressed air cannot be escaped through the unloader valve 104 into the discharge channel 118 (e.g. into atmosphere).

In particular, the first seat valve 110 is formed by a projection formed on an inner periphery of the main chamber.

In the open state mode, the piston 106 is moved in the main chamber along the central axis 112 to a first unseated position, thereby permitting the compressed air to escape through the discharge channel 118 as shown in Fig. 2.

In particular, the compressed air has disadvantageously a non-uniform flow distribution that is changing while the compressed air is directed to the discharge channel 116 (shown with arrows of different size).

In particular, the flow parameters (such as velocity, pressure and density) significantly vary as soon as the compressed air enters into the discharge channel (which for example is in the atmospheric pressure).

This unsteady flow of the compressed air adversely affects the operation of the unloader valve 104.

In particular, the unloader valve cannot be fully opened (i.e. in a wide-open state mode) because of the sudden pressure drop in the main chamber, the spring force pushes the piston towards the first valve seat 110. This in turn limits the amount of the compressed air that can be discharged (unloaded) via the unloader valve 104.

In particular, at certain flow rates of the compressed air, the unloader valve cannot reliably discharge the compressed air, which causes the pressure to increase in the compressed air supply system (including the storage tanks and/or the braking system). For example, the higher the pressure and the air flow, the higher the amount of air not discharged to the atmosphere, but pumped into the vehicle's reservoirs.

The unloader spring force (shown by two grey arrows in Fig. 2) that is acting on the piston 106 keeps the unloader valve 104 in the closed state.

However, the surface area difference between the two sealing rings 146, 148 that are arranged on the piston, at locations where the pressure acts, imbalances the force distribution.

The unbalanced forces (arrows with broken-dotted lines in Fig. 2) cause the piston to be moved in the open state mode.

When the force applied by the compressed air and the control pressure is larger than the spring force of the (first) spring 108, the piston is moved and the unloader valve is in the open state mode.

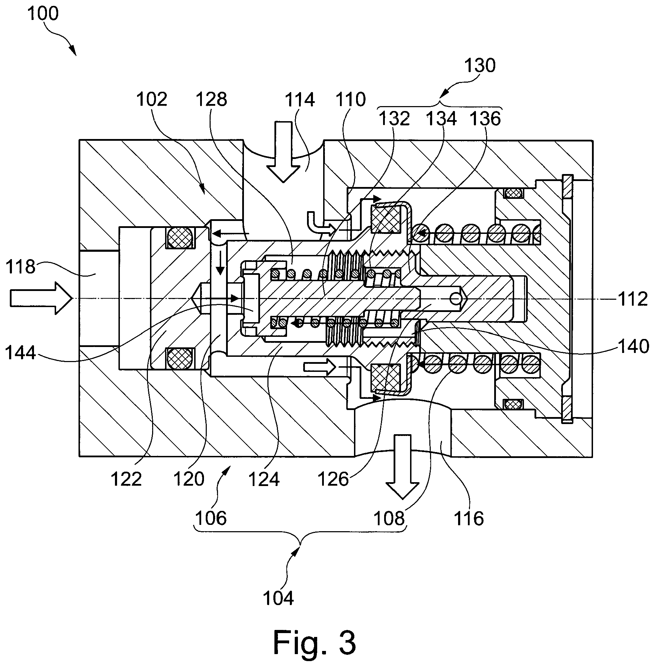

**Fig. 3** shows an unloader valve assembly 102 for a compressed air supply system 100 according to the present invention, for example for a compressed air supply system of a vehicle, when the safety valve is inactive, i.e. in a closed state. Reference signs are used for the common components/features of the unloader valve 104 of the present invention and the known the unloader valve as shown in Figs. 1 and 2.

The unloader valve assembly 102 comprises an unloader valve 104 and a safety valve 130.

The unloader valve 104 comprises a piston 106 and a first spring 108. The piston is configured to move (along the central axis 112) against a biasing force of the first spring 108 between a seated position on a first valve seat 110 and a first unseated position.

The safety valve 130 comprises a valve stem 132 and a second spring 134 that is acting on the valve stem 132 to thereby keep the safety valve in a closed state.

In particular, the unloader spring force (indicated by two grey arrows) is configured to keep the piston 106 in the first seated position 110, i.e. the closed state.

The spring force of the second spring 134 is configured to keep the (integrated) valve stem in a second seated position 140, i.e. in the closed state.

The unloader spring force is calibrated to keep, under normal operation, the unloader valve of the air compressor (i.e. in the load mode) of the compressed air supply system 100 in the closed state. For example, the spring force is between 140-170 N, preferably between 150-160 N.

In particular, the piston 106 further comprises a piston channel 120 that is communicating with the piston chamber 128 defined within the piston 106.

The piston 106 further comprises a piston head 122, a piston body 124 and a piston pin 126.

In particular, the piston pin 106 is detachably fixed to the piston body. For example, the piston pin is screwed onto an inner perimeter of the piston body.

The compressed air is configured to be channelled into the main chamber via the inlet channel 114. In particular, the compressed air acting onto the piston creates unbalanced forces that are acting on the piston 106 (in particular the piston body).

Further, a control pressure signal is applied onto the piston 106 (in particular onto the piston head 122) through the control channel 118.

In particular, when the combination of all forces (a net force) acting on the piston 106 is large enough to surpass the first spring force 108, the unloader valve 104 is configured to be opened (activated). For instance, when the spring force falls within the range of 150 to 160 N and there is no pressure in the inlet channel 114, approximately 6 bar is needed in channel 118 for activating the unloader valve. Any pressure in channel 114 facilitates the piston's opening, thereby reducing the necessary pressure in channel 118.

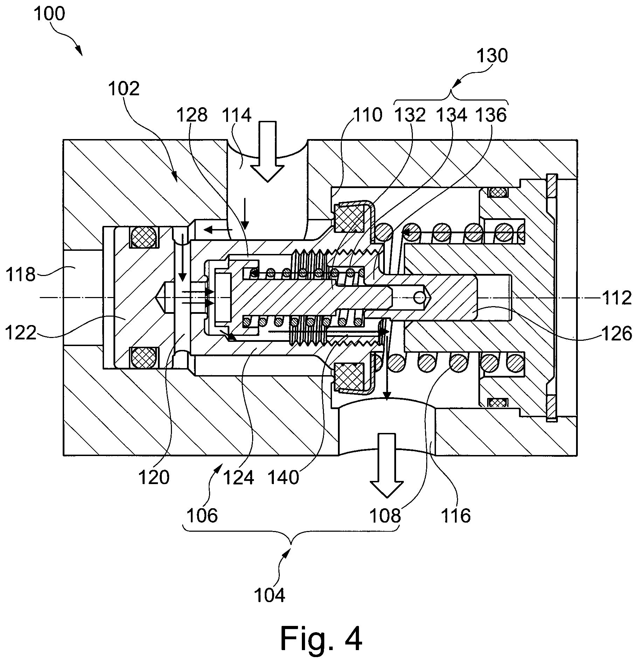

**Fig. 4** shows the unloader valve assembly 102 for a compressed air supply system 100 according to the present invention in an active state.

In the unloader valve assembly's active state, the compressed air (within the inlet channel 114) acting on the unloader valve assembly exceeds a first predetermined condition.

For example, the safety valve 130 is configured to be activated for directing the compressed air received from the inlet channel 114 to the discharge channel 116, when the pressure of the compressed air in the inlet channel 114 exceeds a given/predetermined pressure level.

Being an adjustable safety valve, this can be any value between 11 - 17bar with the current design. This range is achieved by two compression spring variants (pos 134). A weaker spring with e.g. adjustable range of 11 - 15 bar, and a stronger spring with, e.g. adjustable range of 15 - 17 bar. This ranges can be extended and/or varied in either direction by the use of springs having other strengths.

In particular, the pressure level may vary between 11 and 17 bar and the setting (configuration) of the safety valve can be adjusted, as appropriate. This adjustment can be accomplished, for example, through two types of compression springs 134. For example, one is a weaker spring with an adjustable range of approximately 11 to 15 bar, and the other is a stronger spring with an adjustable range of approximately 15 to 17 bar. It is further possible to expand this range in either direction by utilizing new springs.

During normal operation of the compressor (in the loaded and unloaded modes) the internal safety valve is inactive. That is the spring force of the second spring 134 is calibrated in a way that the pressure during the normal operation (service) cannot move the valve stem 132.

For example, the valve stem 132 is configured to move against the second spring 134, when the pressure of the compressed air that is channelled inside the piston chamber and acts on the valve stem exceeds the first predetermined level or condition.

In particular, the pressure exceeds the first predetermined level, when the unloader valve 104 remains in the closed state while the pressure increases in the inlet channel 114.

Alternatively or additionally, the pressure in the inlet channel 114 can increase due to the absence of a control pressure in the control channel 118, which in turn keeps the unloader valve in the closed state.

The safety valve 130 is disposed within a piston chamber 128 that is defined within the piston 106 of the unloader valve 104.

In particular, the piston channel is configured to guide the compressed air received from the inlet channel 114 into the piston chamber 116.

The piston chamber 128 comprises an outlet channel 140. The outlet channel 140 is configured to communicate with the discharge channel 116.

The stem valve 132 comprises a head portion 142. In particular, the head portion is configured to block the compressed air from entering into piston chamber.

The head portion 142 comprises a recess for retaining a first sealing element 144.

In particular, in the closed state the safety valve 130 is configured to prevent the compressed air from entering into the piston chamber 128.

The valve stem 132 is configured to move along the central axis 112 and against a biasing force of the second spring 134 between a seated position on a second valve seat 136 and a second unseated position.

In particular, the safety valve is inactive (i.e. closed) and disposed at the second seat valve 136 that is formed on the piston pin 126.

The stem valve is configured to move by a force generated by the compressed air that is (received from the inlet channel 114 and) channelled, via the piston channel 120, into the piston chamber 128.

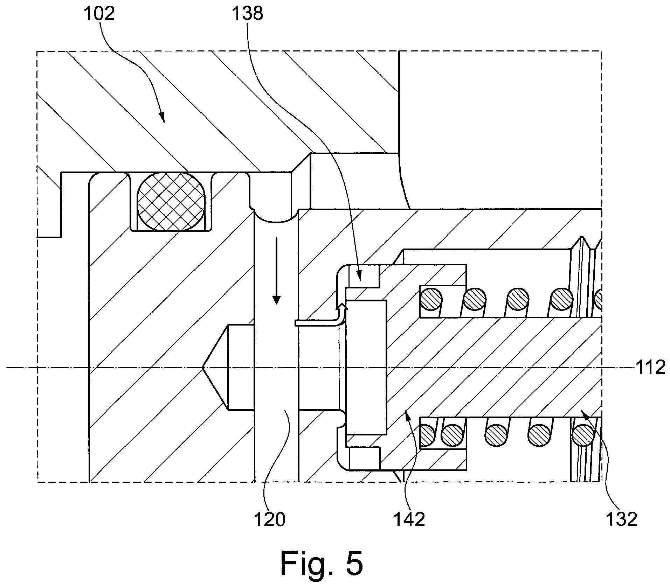

**Fig. 5** shows a part view of the unloader valve assembly 120 according to the present invention, when the safety valve is in a first open state mode.

The safety valve comprises a buffer chamber 138 for maintaining the compressed air in the first open state mode within the piston chamber 128. In particular, the compressed air provides for the first predetermined condition.

For example, the safety valve is configured to obtain the first open state mode when the compressed air has a given pressure level, e.g. 11-17 bar.

In the first open state mode, the valve stem 132 is configured to be moved, thereby facilitating the accumulation of the compressed air within the buffer chamber 138.

In particular, the buffer chamber 138 is defined between the head portion 142 of the stem valve and an inner perimeter of the piston chamber 128.

For example, the buffer chamber 138 is configured to be created (is provided) by a gap between the head portion of the stem valve and the inner periphery of the piston chamber. The gap is designed and configured such that it permits the entry of the compressed air, meeting the first predetermined condition, into the buffer chamber. In this way, the gas functions as a nozzle, facilitating the flow of the compressed air in a controlled manner.

The buffer chamber is defined by the first bore of the piston body 124 and the head portion of the stem valve 132.

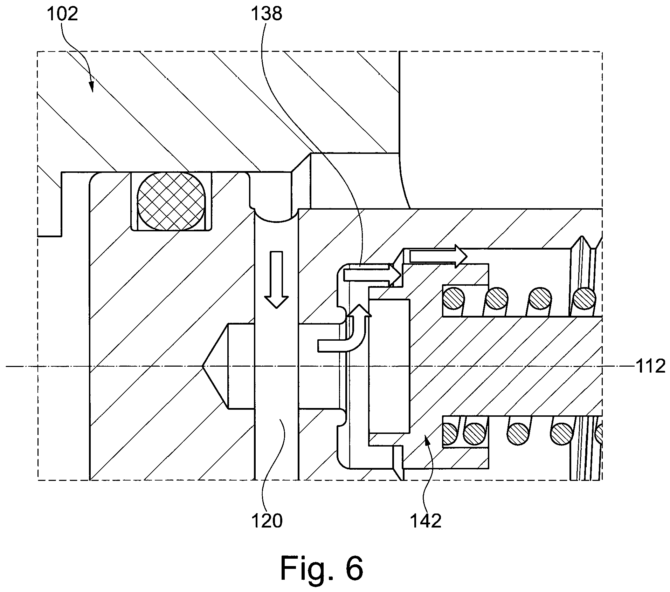

Fig. 6 shows a part view of the unloader valve assembly 102 according to the present invention, when the safety valve is in a second open state mode.

The safety valve 130 is configured to obtain the second open state mode, when the compressed air within the buffer chamber 138 goes beyond the first predetermined condition. In particular, the compressed air provides for a second predetermined condition.

For example, the safety valve 130 is configured to obtain the second open state mode, when the pressure within the buffer chamber exceeds the second pressure level.

In the second open state mode the valve stem 132 is configured to move to thereby direct the compressed air within the buffer chamber 138 via the outlet channel 140 into the discharge channel 116).

In the first open state mode the stem valve is configured to define a buffer chamber 138 between the head portion 142 of the stem valve and an inner perimeter of the piston chamber 128 for maintaining the compressed air therein.

In particular, when the safety valve 130 is activated and the valve stem 132 is moved into the second open state mode, the outlet channel 140 (provided in the piston pin) is in fluid communication with the discharge channel 116.

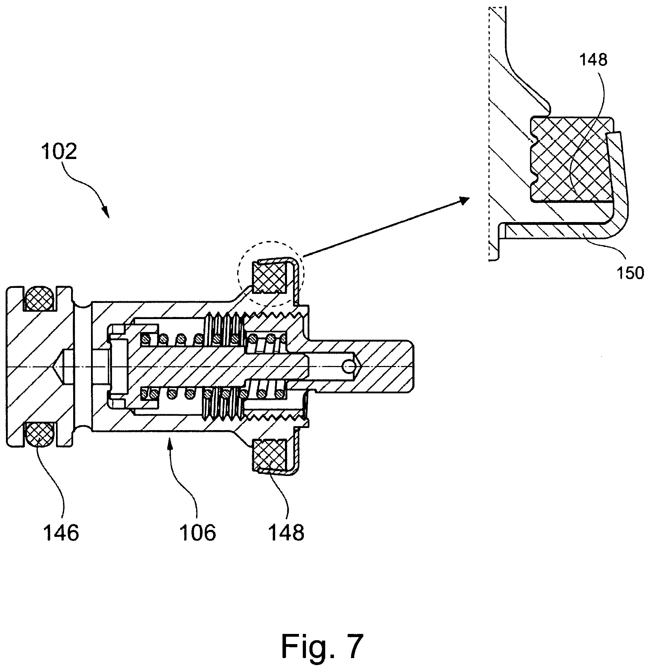

Fig. 7 illustrates a schematic part view of the piston 106 and sealing elements 146, 148.

The sealing elements comprise the first sealing ring 146, e.g. having a circular cross section, and the second sealing ring 148. The right side of the figure depicts a close-up of the second sealing ring 148

The second sealing ring 148 advantageously is of a square cross section.

For example, the unloader assembly 102 further comprises a fixing element 150, e.g. a metallic disc (a stainless steel) that is configured to hold and fix the second sealing ring in place. The disc is configured to be bent over the second sealing ring (flex) for an improved retention of the second sealing ring 148.

In particular, on the piston 106 two sealing edges of the second sealing element 148 are held in place, i.e. one edged by a shoulder on the piston and the other one by the metallic disc. This further increases the effectiveness of the sealing. The more secure fixing (on both side of the square-ring) ensures that the sealing is fixed very firmly and can withstand the effect of swelling.

### REFERENCE NUMERALS

- 100: a compressed air supply system
- 102: an unloader valve assembly
- 104: an unloader valve
- 106: a piston
- 108: a first spring
- 110: a first valve seat
- 112: a central axis
- 114: an inlet channel
- 116: a discharge channel
- 118: a control channel
- 120: a piston channel
- 122: a piston head
- 124: piston body
- 126: a piston pin
- 128: a piston chamber
- 130: a safety valve
- 132: a valve stem
- 134: a second spring
- 136: a second valve seat
- 138: a buffer chamber
- 140: an outlet channel
- 142: a head portion
- 144: a sealing element
- 146: a first sealing ring
- 148: a second sealing ring
- 150: a fixing element

## Claims

1. An unloader valve assembly (102) for a compressed air supply system (100), in particular for a compressed air supply system of a vehicle,
the unloader valve assembly (102) comprising an unloader valve (104),
wherein the unloader valve (104) comprises a piston (106) and a first spring (108), and
wherein the piston is configured to move against a biasing force of the first spring (108) between a seated position on a first valve seat (110) and a first unseated position,
the unloader valve assembly (102) further comprising a safety valve (130),
wherein the safety valve (130) is configured to be activated for directing a compressed air received from an inlet channel (114) to a discharge channel (116) when a first predetermined condition in the inlet channel (114) is exceeded by the compressed air.

2. The unloader valve assembly (102) for a compressed air supply system (100) according to claim 1,
**characterized in that**
the safety valve (130) is disposed within a piston chamber (128) defined within the piston (106) of the unloader valve (104).

3. The unloader valve assembly (102) for a compressed air supply system (100) according to claim 2,
**characterized in that**
the piston chamber (128) comprises an outlet channel (140) configured to communicate with the discharge channel (116).

4. The unloader valve assembly (102) for a compressed air supply system (100) according to claims 2 or 3,
**characterized in that**
the piston (106) comprises a piston channel (120) configured to guide the compressed air into the piston chamber (116).

5. The unloader valve assembly (102) for a compressed air supply system (100) according to any one of the preceding claims,
**characterized in that**
the safety valve (130) comprises a valve stem (132) and a second spring (134) acting on the valve stem (132) to keep the safety valve in a closed state, wherein in the closed state the safety valve (130) is configured to prevent the compressed air from entering into the piston chamber (128).

6. The unloader valve assembly (102) for a compressed air supply system (100) according to claim 5,
**characterized in that**
the valve stem (132) is configured to be moved along a central axis (112) and against a biasing force of the second spring (134) between a seated position on a second valve seat (136) and a second unseated position, preferably the stem valve (132) is configured to be moved by the compressed air that is channelled via the piston channel (120) into the piston chamber (128).

7. The unloader valve assembly (102) for a compressed air supply system (100) according to claims 5 or 6,
**characterized in that**
the valve stem (132) comprises a head portion (142), preferably the head portion comprising a recess for receiving a sealing element (144).

8. The unloader valve assembly (102) for a compressed air supply system (100) according to one of claims 5 to 7,
**characterized in that**
the safety valve comprises a buffer chamber (138) for maintaining the compressed air in a first open state mode within the piston chamber (128), preferably the compressed air providing the first predetermined condition.

9. The unloader valve assembly (102) for a compressed air supply system (100) according to claim 8,
**characterized in that**
in the first open state mode, the valve stem (132) is configured to be moved in the piston chamber (128), thereby allowing the entry and accumulation of the compressed air into the buffer chamber (138),in particular is the buffer chamber comprises a gap that is arranged between the head portion (142), in particular an outer perimeter of the head portion (142), and an inner perimeter of the piston chamber (128).

10. The unloader valve assembly (102) for a compressed air supply system (100) according to claims 8 or 9,
**characterized in that**
the safety valve (130) is configured to obtain a second open state mode, when the compressed air within the buffer chamber (138) exceeds the first predetermined condition, in particular providing a second predetermined condition.

11. The unloader valve assembly (102) for a compressed air supply system (100) according to claim 9,
**characterized in that**
in the second open state mode the valve stem (132) is configured to move, thereby directing the compressed air via the outlet channel (140) into the discharge channel (116).

12. The unloader valve assembly (102) for a compressed air system according to one of the preceding claims,
**characterized in that**
the piston (106) further comprises a piston head (122), a piston body (124) and a piston pin (126), preferably the piston pin being detachably fixed to the piston body.

13. The unloader valve assembly (102) for a compressed air system according to claim 12,
**characterized in that**
the piston body (124) comprises a first bore and a second bore, and the piston pin comprises a third bore, preferably the first, second and third bores together define the piston chamber (128) for accommodating the safety valve (130).

14. The unloader valve assembly (102) for a compressed air system according to claims 12 or 13,
**characterized in that**
the piston head (122) comprises a groove on its outer perimeter for receiving a first sealing ring (146).

15. The unloader valve assembly (102) for a compressed air supply system (100) according to claims 9, 10 or 11,
**characterized in that**
the piston body (124) comprises a recess for receiving a second sealing ring (148) on its outer perimeter.
